# FASCICULE DE BREVET EUROPEEN

(11) **EP 3 404 874 B1**
(45) Date de publication et mention de la délivrance du brevet: **17.02.2021**
(21) Numéro de dépôt: 18172969.0
(22) Date de dépôt: 17.05.2018
(51) Int. Cl.: H04L 12/58

(54) **PROCÉDÉ DE GESTION DE RÉPONSE**
ANTWORTMANAGEMENTVERFAHREN
RESPONSE MANAGEMENT METHOD

(30) Priorité: 19.05.2017 FR 1754447
(43) Date de publication de la demande: 21.11.2018
(73) Titulaire: ORANGE, 75015 Paris (FR)
(72) Inventeur: FLOURY, Cédric, 92326 Châtillon Cedex (FR); CATTEAU, Aurore, 92326 Châtillon Cedex (FR)

(56) Documents cités:
- EP-A1- 1 657 871
- WO-A2-2013/052333
- US-A1- 2006 281 449

## Description

### DOMAINE DE L'INVENTION

L'invention se rapporte au domaine des télécommunications.

L'invention concerne tout particulièrement un procédé de gestion des communications à travers un ensemble de services et de terminaux via un réseau de communication. L'invention se rapporte également au dispositif intégrant le procédé correspondant.

Le réseau de communication est quelconque ; par exemple celui-ci peut être un réseau téléphonique, réseau Internet, etc.

Les terminaux visés ci-dessus intègrent des dispositifs à travers lesquels des utilisateurs sont susceptibles d'interagir via des interfaces Homme-machine ; par exemple des téléphones, des tablettes, des ordinateurs, des stations de travail, etc.

### ARRIÈRE-PLAN TECHNOLOGIQUE

Depuis plusieurs années, la société assiste à la démultiplication du nombre et de la nature des terminaux de communication utilisés par un même individu : un ou plusieurs téléphones (smartphones, téléphones IP, etc.), tablettes, télévisions connectées, ordinateurs constituent de nos jours l'environnement électronique personnel ou partagé d'un grand nombre d'individus.

La connexion aux autres est possible à tout moment, à tout endroit et à partir de tout ou partie de ces terminaux, à travers différents modes ou services de communication basés sur différents objets tels que SMS, courriel, appel vocal ou vidéo, message instantané, mais aussi message posté sur les réseaux sociaux, etc. L'accès aux autres par ces modes de communication depuis n'importe lequel des terminaux d'un individu, a fait évoluer les usages : on lance un appel vocal depuis un ordinateur, on envoie un courriel depuis son téléphonique, on envoie un SMS depuis une tablette, etc.

Chaque individu possède plusieurs adresses à partir desquelles différents interlocuteurs peuvent se référer pour entrer en contact avec lui. L'ensemble des fiches d'interlocuteurs dites « fiches contact » détenues par un individu, constitue le répertoire électronique comprenant les coordonnées des différents interlocuteurs de cet individu. Pour une gestion simplifiée, ce répertoire est de plus en plus fréquemment déplacé vers le réseau (et non plus localement stocké sur chaque terminal d'un individu) : les données et les mises à jour de ce répertoire électronique sont alors accessibles de n'importe quel terminal de l'individu.

Pour être contacté, un individu possède généralement plusieurs adresses par type d'adresses (adresse e-mail, numéro de téléphones, pseudonyme, etc.) ; par exemple, un ou plusieurs numéros de téléphone professionnels, un ou plusieurs numéros de téléphone personnels, et plusieurs adresses de messagerie électronique, par exemple pour cloisonner les expéditeurs (une adresse pour des échanges formels, une adresse pour des échanges informels, une adresse pour des courriers indésirables, etc.). Cependant, un individu ne choisit pas à partir de quelle(s) adresse(s) chacun de ses interlocuteurs choisit de le contacter.

En effet, alors qu'il peut parfois maîtriser la diffusion de ses adresses en les communiquant lui-même à un interlocuteur donné, il ne maîtrise pas, ou peu, les adresses récupérées « à la volée » par ses interlocuteurs ou ses contacts ; par exemple, un seul message électronique envoyé par erreur depuis une adresse professionnelle peut alimenter la fiche contact de son interlocuteur d'une nouvelle adresse alors que les communications entre les deux individus s'établissaient jusque-là, exclusivement à travers une adresse personnelle.

Réciproquement, un individu ne maîtrise pas les coordonnées de plus en plus nombreuses, de chacun de ses interlocuteurs. Lors de l'envoi d'un courriel, le choix de la sélection d'une adresse électronique vers un destinataire parmi les possibilités proposées par la fiche contact de ce destinataire peut être source de questionnement ; dans le cas d'une initiative de réponse à une communication d'un interlocuteur, l'entrée automatique de l'adresse du destinataire utilisée (précédemment émetteur) n'est pas non plus gage d'une direction d'envoi pertinente, du point de vue du type d'adressage ou même de l'adresse elle-même. Et pourtant, l'interlocuteur souhaite s'adresser à son interlocuteur selon la direction qui lui permettra de rentrer en contact le plus efficacement avec celui-ci.

Le document 2006/281449 A1 décrit un procédé et un système d'accès à des informations additionnelles associées à un numéro d'une base de registre d'appels et d'établissement d'une communication utilisant les informations additionnelles.

Le document 2013/052333 A2 décrit un dispositif et un procédé de fourniture d'une liste de suggestions d'adresses de communications classées selon différents critères de communication.

L'invention offre une solution ne présentant pas les inconvénients de l'état de la technique.

### L'INVENTION

A cet effet, selon un premier aspect fonctionnel, il est proposé un procédé selon la revendication 1.

Le procédé de gestion ici décrit permet de rectifier la direction d'une réponse, par exemple élaborée à partir d'une notification d'une communication reçue par un individu, en se basant sur un historique de communications entre cet individu et son interlocuteur. Par historique de communications est entendu un ensemble d'informations relatives à des communications précédemment effectuées entre un individu et son interlocuteur, incluant les échecs de mises en relation entre l'individu et son interlocuteur.

Ainsi, le procédé de gestion ici décrit offre l'avantage pour tout individu souhaitant répondre à un interlocuteur, reconnu et identifié comme contact, de s'affranchir de la pertinence ou non de l'adresse utilisée par cet interlocuteur lors d'une première communication, communication à laquelle l'individu souhaite répondre. Par contact d'un individu est entendu une entité ou une personne dont les données identificatrices sont stockées dans une base de données appartenant à l'individu. En pratique, les données identificatrices d'un contact correspondent en outre au nom, au prénom, entreprise, adresse postale, etc. ainsi qu'à différentes adresses de ce contact. Dans la suite, une adresse peut être un numéro de téléphone, une adresse de messagerie électronique ou toute autre donnée d'identification utilisée lors de communications entre individus à travers un réseau de communication, en particulier à travers des services de communication. Un pseudonyme est également considéré comme une adresse relative à un individu, adresse par exemple utilisée comme identifiant dans un réseau social.

La deuxième adresse est validée par le second individu.

Avantageusement, ceci permet à tout individu de valider ou d'invalider une adresse sélectionnée par le procédé, ou tout ou partie d'une sélection effectuée parmi des adresses. Une seule adresse est proposée à l'individu. Par défaut, si l'adresse proposée est identique à l'adresse entrée manuellement par l'individu ou automatiquement par un système, la validation par l'individu n'est pas demandée par le procédé, et automatiquement validée. Un paramétrage utilisateur permet cependant de modifier ce mode par défaut.

Selon un deuxième mode de réalisation, qui pourra être mis en œuvre alternativement ou cumulativement avec les précédents, la deuxième adresse est associée à au moins un terminal du premier individu.

Avantageusement, ce mode de réalisation permet de désigner, à travers la sélection d'une adresse, un terminal donné. Par exemple, si un individu initie un message de type SMS comme réponse à son interlocuteur qui l'a précédemment contacté par un appel vocal provenant d'un téléphone fixe professionnel, le procédé peut proposer, en fonction par exemple des résultats d'évaluation des délais de réponse de son interlocuteur obtenus de précédentes communications vers cet interlocuteur, de rediriger le message vers une autre adresse associée à un autre terminal, par exemple un mobile. Par délai de réponse d'un interlocuteur est entendu une durée entre une communication émise d'un individu vers un interlocuteur et une communication émise ultérieurement par cet interlocuteur vers l'individu, quels que soient les adresses, modes ou services de communication ou terminaux utilisés. Dans un mode de réalisation particulier, la correspondance entre une adresse et le ou les terminaux associés est signalée au second individu. Ces associations adresse/terminal, si elles ne sont pas effectuées par un dispositif existant (par exemple un répertoire électronique) que le procédé peut interroger, elles sont effectuées par le procédé lui-même et le dispositif associé.

Selon un troisième mode de réalisation, qui pourra être mis en œuvre alternativement ou cumulativement avec les précédents, la sélection est ordonnée à partir d'informations relatives à des communications précédemment effectuées entre les premier et second individus.

Avantageusement, ce mode de réalisation permet d'ordonner les adresses du destinataire de la réponse en les priorisant selon un ou plusieurs critères de recherche. La priorisation des adresses s'effectue à travers l'historique des communications précédemment effectuées entre les premier et second individus : nombre de communications, fréquences de communication, durées de communication, heures de communication, identification de l'initiateur de la communication, etc. Dans un mode de réalisation particulier, tout mode de communication précédemment effectué avec le destinataire est considéré. Un mode de communication spécifie l'interaction entre deux individus, en particulier les adresses utilisées et le ou les services associés (une messagerie instantanée, une messagerie électronique, mais aussi des appels vocaux, des appels vidéos, etc.)

Selon une variante de ce mode de réalisation, la sélection s'effectue au moins à partir d'informations relatives à des communications de même mode que la deuxième communication initiée.

Avantageusement, cette variante permet de limiter la sélection des adresses à travers une recherche des communications précédemment effectuées entre les premier et second interlocuteurs selon le même mode de communication que pour la deuxième communication initiée à destination du premier individu. Pour un même mode de communication, plusieurs adresses peuvent être associées ; ainsi, le procédé permet, par exemple, de suggérer à l'émetteur de la réponse l'adresse électronique dernièrement utilisée pour contacter son interlocuteur à travers l'envoi d'un courriel. Dans un mode de réalisation particulier, si le mode de communication de la deuxième communication initiée est différent du mode de communication de la première communication, le procédé effectue une sélection d'adresses à partir d'informations relatives aux communications effectuées selon les deux modes de communication.

Selon une sous-variante de cette variante, la sélection s'effectue également selon des informations de localisation du second individu.

Avantageusement, cette sous-variante permet de guider l'émetteur de la réponse souhaitant répondre à un interlocuteur, vers une sélection d'adresses à travers un historique de communications selon au moins un critère de sélection, celui des données de localisation proches. Dans un exemple de réalisation de cette sous-variante, pour un appel émis de l'étranger, et identifié en tant que tel dans les informations relatives à des communications précédemment effectuées, le procédé recherche l'adresse la plus utilisée pour les communications établies, par exemple selon un mode de communication donné, pour une période correspondant à un déplacement à l'étranger, par exemple dans une zone géographique équivalente.

Selon une autre sous-variante de cette variante, la deuxième adresse correspond à une adresse fréquemment utilisée entre les premier et second individus.

Avantageusement, cette sous-variante permet de proposer à tout individu, l'adresse la plus utilisée par celui-ci pour contacter son interlocuteur, selon un mode de communication donné. Dans un mode de réalisation particulier, les communications ciblées sont les communications uniquement effectuées à l'initiative de l'émetteur de la réponse.

Selon une variante de cette sous-variante, la deuxième adresse correspond à une adresse fréquemment utilisée entre les premier et second individus dans un créneau temporel similaire.

Avantageusement, cette variante permet de limiter davantage la sélection des adresses à travers une recherche des communications précédemment effectuées entre les premier et second individus selon des créneaux horaires similaires. Par créneau horaire est entendu l'ensemble des informations relatives à l'horodatage d'un événement : heures identificatrices de début ou de fin de communication, jours, mois, heures, etc. La similarité d'un créneau horaire correspond à la comparaison de ces informations, selon un ou plusieurs critères. Par exemple, une plage de temps d'un jour de semaine donné peut être un élément de sélection dans l'historique de communications effectuées entre les premier et second interlocuteurs. Dans ce document, les communications dites entre deux interlocuteurs ou avec un interlocuteur ne préfigurent pas de l'identité de l'émetteur ou du destinataire ; de même les communications multipoints (un émetteur de la communication vers un ou plusieurs destinataires) sont également considérées lors des communications attribuées entre deux interlocuteurs.

Selon une autre variante du troisième mode de réalisation, la sélection est ordonnée à partir d'informations relatives à des lancements de communications infructueux précédemment effectuées vers le premier individu.

Avantageusement, ce mode de réalisation permet de sélectionner des adresses selon des résultats, par exemple de type statistique, élaborés à partir de l'historique des communications vers le destinataire de la réponse, et en particulier en considérant les échecs de mises en relation, comme celles de communications en mode synchrone (horodatage des communications, délais entre deux communications, échec de mise en relation et un nouvel essai de mise en relation, etc.).

Selon un quatrième mode de réalisation, qui pourra être mis en œuvre alternativement ou cumulativement avec les précédents, si la deuxième communication est une communication en mode synchrone et que son lancement échoue, une troisième adresse comprise dans la sélection d'adresses est validée par le second individu, et un lancement d'une troisième communication est effectué vers la troisième adresse.

Avantageusement, ce mode de réalisation permet d'optimiser les chances de l'utilisateur de contacter son interlocuteur à travers l'établissement une communication en mode synchrone entre deux individus. Par mode synchrone est entendu toute communication établissant la création d'une session à travers un canal de communication pour une période de temps initiée et clôturée par l'un ou l'autre des interlocuteurs ; par exemple une session d'appel téléphonique ou vidéo-conférence. Dans un mode de réalisation particulier, si la troisième adresse est identique à la première adresse, la validation est également effectuée par l'utilisateur.

L'invention comprend également un programme d'ordinateur apte à être mis en œuvre sur un dispositif de gestion comprenant des instructions de code qui, lorsqu'il est exécuté par un processeur, réalise le procédé de gestion.

L'invention comprend également un support de données sur lequel a été mémorisée au moins une série d'instructions de code de programme pour l'exécution du procédé de gestion.

Selon un aspect matériel, il est proposé un dispositif selon la revendication 12.

Par intégration du procédé de l'invention, le dispositif de gestion permet en particulier à un individu une sélection d'une adresse pour contacter un interlocuteur afin de proposer la meilleure adresse de son interlocuteur aux regards de l'historique des communications précédemment effectuées entre l'individu et son interlocuteur.

L'invention sera mieux comprise à la lecture de la description qui suit, donnée à titre d'exemple et faite en référence aux dessins annexés sur lesquels :
La figure 1 illustre un environnement dans lequel le procédé ici décrit est mise en œuvre.
La figure 2 illustre un exemple de mode de réalisation d'un dispositif ici décrit intégré dans des équipements de communication
La figure 3 illustre un équipement de communication dans lequel un dispositif de gestion ici décrit est intégré.
La figure 4a illustre les étapes du procédé ici décrit.
La figure 4b illustre schématiquement une étape clé du procédé ici décrit.
La figure 5 illustre une interface utilisateur représentant une étape clé du procédé ici décrit.

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la description.

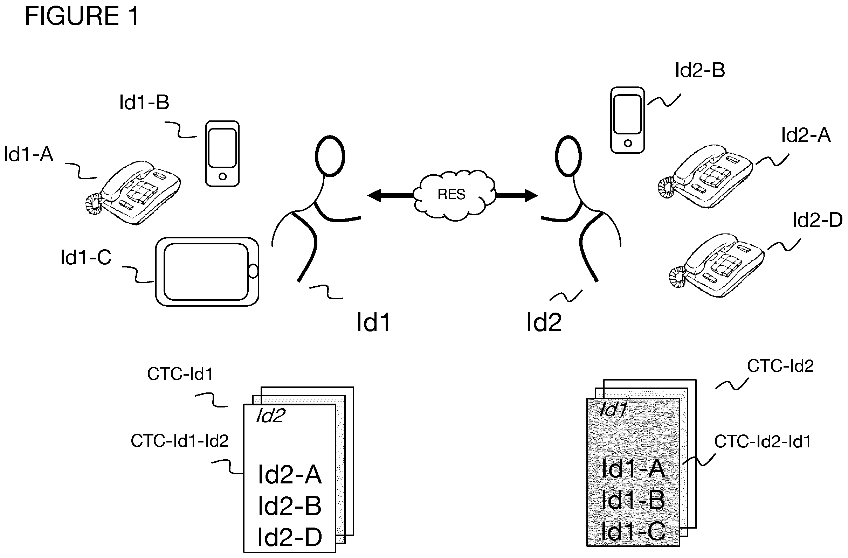

La figure 1 illustre de façon schématique un environnement de mise en œuvre du procédé de gestion ici présenté. Deux identités Id1 et Id2, représentatives de deux individus, communiquent via un ou plusieurs réseaux de communication RES à travers leurs différents terminaux : l'individu Id1 possède un téléphone mobile référencé Id1-B, un téléphone fixe au bureau Id1-A, et une tablette Id1-C. Dans un mode de réalisation particulier, les deux individus Id1 et Id2 échangent entre eux à travers des modes de communication principalement de type vocal, textuel et vidéo, à travers les différents services accessibles à partir de ces terminaux tels que services de téléphonie, applications ou logiciels de communication tels messageries instantanées, ou logiciels de vidéoconférence, etc. De la même façon, l'individu référencé Id2 possède un téléphone mobile référencé Id2-B et deux téléphones fixes Id2-A (domicile) et Id2-D (bureau).

Dans ce mode de réalisation, les individus Id1 et Id2 possèdent respectivement les coordonnées des individus Id2 et Id1 en mémoire dans un ou plusieurs de leurs terminaux respectifs. Ainsi la liste des coordonnées de chaque interlocuteur, appelé aussi contact, de l'individu Id1 est représenté par l'élément CTC-Id1 et contient en particulier les coordonnées de l'interlocuteur Id2 référencé à travers un élément CTC-Id1-Id2. Alternativement, les données regroupant l'ensemble des coordonnées détenues par un individu sont des données stockées dans un espace, par exemple virtualisé, accessible de tout terminal de cet individu. Un système virtuel de stockage en ligne est largement étendu afin de répondre à ce besoin de centralisation des données personnelles accessibles de tout terminal.

Dans ce mode de réalisation particulier, les éléments appelés « fiches-contact » et référencés CTC-Id1-Id2 et CTC-Id2-Id1, contiennent respectivement des adresses de destination aux différents terminaux de Id2 et de Id1. Par adresses de destination est entendu tout élément permettant d'effectuer une communication, quelle que soit la nature de celle-ci, vers le terminal associé. En particulier, une adresse de destination à un terminal peut-être un numéro de téléphone relatif à un téléphone mobile. Dans ce cas particulier, ce numéro de téléphone permet d'appeler le téléphone mobile ou bien d'envoyer un message textuel, audio ou vidéo. Alternativement, les adresses contenues dans les fiches contact ne sont pas obligatoirement associées à des terminaux.

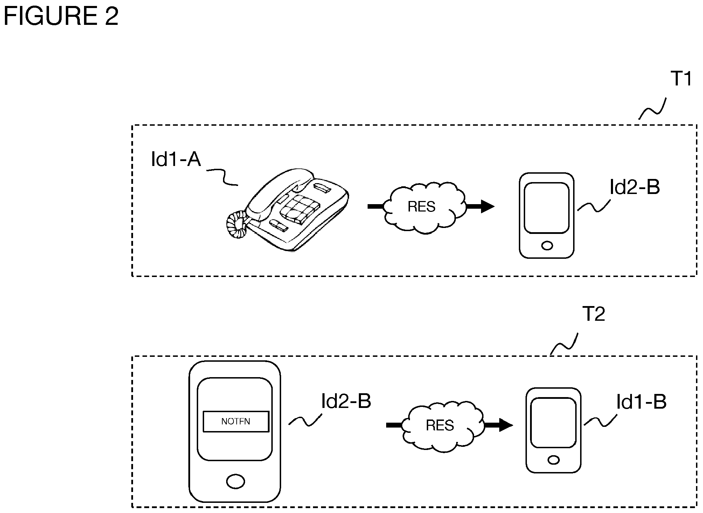

La figure 2 illustre un mode de réalisation particulier du procédé ici décrit. A un instant T1, l'individu Id1 appelle du téléphone fixe de son bureau Id1-A l'individu Id2 sur son téléphone mobile Id2-B afin de le prévenir qu'il quitte son bureau afin d'aller chercher les enfants à l'école. L'individu Id2, non disponible pour réceptionner cet appel, ne perçoit pas l'appel mais en prend connaissance sur son téléphone mobile Id2-B quelques minutes plus tard, à travers une notification NOTFN notifiant cet appel.

Au temps T2, l'individu Id2 interagit avec la notification du message et sélectionne la fonctionnalité relative à la rédaction d'un SMS pour répondre à ce correspondant Id1. Au moment d'envoyer le SMS rédigé, le procédé de l'invention signifie à l'individu Id2 que l'envoi, initialement prévu vers le téléphone fixe du bureau (puisque le système a automatiquement repris la référence du terminal utilisé par Id1-A), serait plus pertinent vers le téléphone mobile Id1-B. L'individu Id2 valide cette proposition à travers l'interface utilisateur de son téléphone portable Id2-B. Alternativement, le procédé propose un terminal plus pertinent à l'individu Id2 dès la sélection de la fonctionnalité relative à la rédaction d'un SMS.

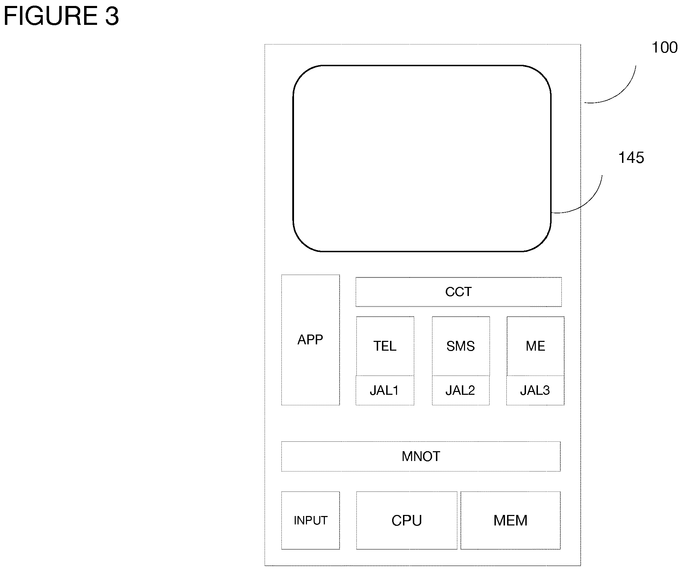

La figure 3 illustre un équipement de communication dans lequel un dispositif de gestion APP ici décrit est intégré.

Dans la description qui suit, l'équipement de communication est illustré comme un dispositif mobile 100. Le dispositif mobile 100 comprend un dispositif d'affichage 145, un processeur CPU, un dispositif d'entrée INPUT et un dispositif de gestion APP. L'interaction utilisateur et la manipulation du rendu du dispositif sur une interface graphique peuvent être obtenues en utilisant le dispositif d'affichage 145, qui est dans notre exemple un écran tactile couplé fonctionnellement au processeur CPU commandant l'interface affichée. Le dispositif d'entrée INPUT et le dispositif d'affichage 145 sont ainsi fusionnés. Certains dispositifs mobiles 100 peuvent également présenter un dispositif d'entrée INPUT comme un clavier.

Le processeur CPU peut commander le rendu et/ou l'affichage de l'interface graphique sur le dispositif d'affichage 145 en fonction du type d'applications, applications natives ou de tiers. Le processeur CPU peut également gérer les entrées utilisateur selon le présent procédé. Le panneau tactile 145 peut être vu comme un dispositif d'entrée permettant des interactions avec un doigt d'un utilisateur ou d'autres dispositifs tels qu'un stylet. L'interface de capteur tactile ou le panneau tactile 145 peut inclure tout circuit approprié pour convertir les signaux analogiques correspondant à l'entrée tactile reçue sur sa surface en toute donnée d'entrée tactile numérique appropriée. De telles données d'entrée tactiles peuvent, par exemple, être utilisées pour effectuer des sélections de parties de l'interface graphique d'une application. L'entrée reçue du contact d'un utilisateur est envoyée au processeur CPU. Le panneau tactile 145 est configuré pour détecter et signaler l'emplacement du point de contact au processeur CPU, qui peut interpréter les touches conformément à l'application et à l'interface graphique en cours.

Les applications de communication TEL, SMS et ME sont respectivement des applications, souvent natives, relatives aux services de téléphonie (TEL), de messagerie instantanée (SMS) et de messagerie électronique (ME). Alternativement, d'autres services de communications, par exemple à travers des applications relatives aux réseaux sociaux, peuvent être considérés. Dans cet exemple de réalisation, nous limiterons la description du procédé aux trois modes de communications que sont les appels téléphoniques, les SMS et les messages électroniques appelés également courriels.

Ces applications s'alimentent en particulier de données fournies par des bases de données constituées à travers des applications, appelées applications sources telles qu'un répertoire électronique constitué par un individu : une application CCT illustre ce répertoire répertoriant l'ensemble des données identificatrices des contacts d'un individu, appelées fiches contact.

Dans un mode de réalisation particulier, on considère que chacune de ces applications sources constitue une base de données relative à un historique des communications établies selon le mode de communication relatif à l'application : les applications TEL, SMS et ME possèdent ainsi respectivement une base de données associée JAL1, JAL2 et JAL3. Alternativement, une ou plusieurs bases de données communes répertorient des historiques de communications effectuées d'un individu vers un deuxième individu, et réciproquement, à travers un ou plusieurs équipements de communication, quelle que soit le mode de communication.

Un module applicatif MNOT, généralement installé nativement dans le système d'exploitation du dispositif mobile 100, est en particulier dédié à l'affichage des notifications issues du système d'exploitation lui-même, mais également issues des applications installées sur le dispositif 100. A travers ces notifications, l'utilisateur peut être informé de tout événement devant ou pouvant être porté à son attention (état de la batterie, réception d'un courriel, etc.). L'interaction utilisateur avec un composant graphique relatif à une notification issue d'une des applications TEL, SMS ou ME, permet en particulier à l'utilisateur du dispositif mobile 100 d'accéder directement à une ou plusieurs des fonctionnalités de l'application correspondante, généralement selon un affichage contextualisé.

Dans un mode de réalisation, le dispositif de gestion APP relatif au procédé ici décrit communique avec les applications de communication TEL, SMS et ME, et l'application CCT.

Dans un mode de réalisation, un utilisateur souhaite répondre efficacement à une communication reçue mais non honorée : il sélectionne le libellé relatif à la communication reçue afin de lui répondre. Dans un mode de réalisation particulier, le mode de communication utilisé par son interlocuteur et/ou selon l'adresse utilisée par celui-ci sont repris par l'application correspondante ; en effet, l'utilisateur interagit avec une notification ou lance directement l'application de communication. Dans le premier cas, l'applicatif MNOT provoque le lancement de l'application, ou dans le deuxième cas, le lancement de l'application par l'utilisateur permet par exemple à celui-ci d'accéder à l'historique des communications.

Lorsque l'utilisateur valide l'envoi de sa réponse à partir d'une application de communication, le dispositif de gestion APP est alors interrogé par l'application de communication afin de vérifier la pertinence de la direction de la réponse. Le dispositif de gestion APP identifie une nouvelle adresse de direction pour la communication, au regard, à la fois de la recherche effectuée à travers la fiche contact stocké dans l'application CCT contenant les adresses de l'interlocuteur Id1, et à travers des informations stockés dans une ou plusieurs des bases de données JA1, JA2, JA3 relatives aux communications effectuées avec l'interlocuteur Id1.

Dans un mode de réalisation particulier, le procédé propose à l'utilisateur l'adresse la plus utilisée par l'utilisateur Id2 pour contacter son interlocuteur Id1 dans le mode de communication initié.

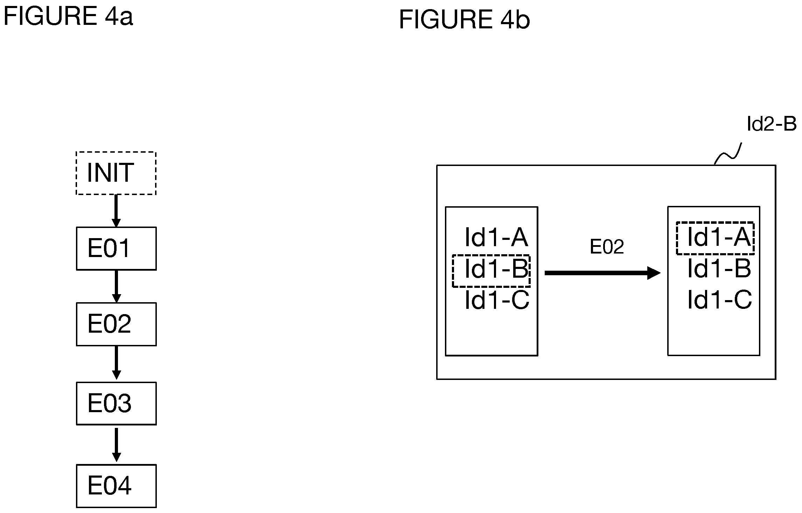

La figure 4a illustre des étapes du procédé de gestion selon un mode particulier de réalisation du procédé de gestion.

Lors d'une étape d'initialisation référencée INIT, un individu est notifié par son terminal d'un appel ou d'un message reçu d'un premier individu. Cette notification s'effectue en particulier par l'affichage d'un message tel que l'élément NOTFN de la figure 2. Dans ce mode de réalisation, l'identification de l'émetteur est effectuée par l'individu grâce à l'enregistrement effectué préalablement dans son répertoire électronique.

Lors d'une étape E01, l'individu souhaite alors rappeler son interlocuteur à travers un service de vidéophonie : il initie une réponse en composant (ou sélectionnant à travers des données de sa fiche contact) un numéro de téléphone et en ordonnant le lancement de la communication vers cette adresse.

Lors d'une étape E02, le procédé lance une recherche de numéros de téléphone de son interlocuteur en sa possession dans son répertoire électronique selon l'historique des communications effectuées entre ces deux interlocuteurs. Dans un mode de réalisation particulier, ce procédé ordonne l'historique des appels vidéo précédemment établis avec cet interlocuteur, en fonction de critères de sélection fixés par défaut par le dispositif de gestion (par exemple selon un créneau horaire similaire). Alternativement, l'utilisateur peut accéder aux paramétrages de ce dispositif de gestion.

Lors d'une étape E03, le procédé propose à l'individu de modifier l'adresse de destination, au regard du critère de sélection du numéro le plus souvent utilisé pour appeler cet interlocuteur par un appel vidéo. L'individu valide, à travers l'interface, cette redirection.

Lors d'une étape E04, l'application de communication lance l'appel vidéo selon l'adresse validée.

La figure 4b illustre schématiquement l'étape E02 décrit dans la figure 4a.

Dans un mode de réalisation, l'individu Id2 utilise son mobile Id2-B (cf. figure 1) intégrant le procédé de gestion. A la fin de l'étape INIT, le procédé identifie l'adresse Id1-B utilisé par son interlocuteur Id1. Lors de l'étape E01, l'individu Id2 initie une réponse vers cet interlocuteur Id1. A l'étape E02, lorsque l'individu Id2 lance la communication vers l'adresse Id1-B, le procédé de gestion se lance. Dans un mode de réalisation, une deuxième adresse Id1-A, associée à l'interlocuteur Id1, est proposée. L'individu Id2 valide ce choix dans l'étape E03 et la communication se lance dans l'étape E04 vers l'adresse Id1-A.

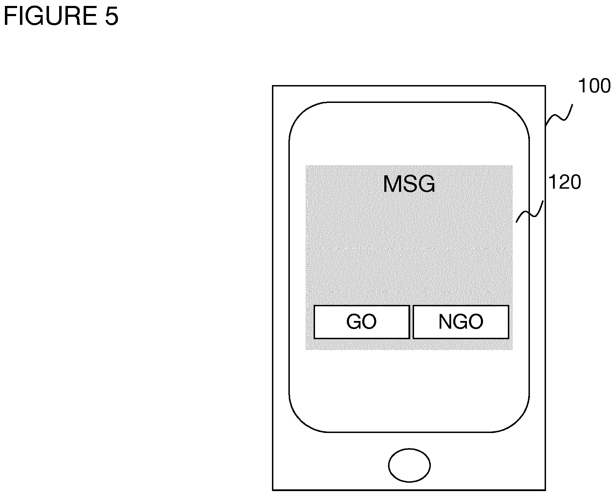

La figure 5 illustre une interface utilisateur représentant une étape clé du procédé ici décrit.

Dans un mode de réalisation, le procédé sélectionne une deuxième adresse, différente ou identique à une première adresse proposée automatiquement par l'application de communication. Le procédé affiche alors sur l'interface graphique du dispositif mobile 100 de la figure 5 un élément graphique appelé boite de dialogue (120), permettant à l'utilisateur de valider ou d'invalider l'adresse proposée par le procédé. La validation par la sélection de l'élément référencé GO, entraine la disparition de l'élément graphique 120 et le lancement de la communication en direction de la deuxième adresse. L'invalidation par la sélection de l'élément référencé NGO, entraine également la disparition de l'élément graphique 120 et le lancement de la communication en direction de la première adresse. Dans un message MSG adressé à l'utilisateur du dispositif mobile 100, la première et la deuxième adresse sont par exemple mentionnées, ainsi que le terminal de destination selon la pertinence de cette information.

Dans le présent texte, les dispositifs ou modules peuvent être mis en œuvre sous forme logicielle (ou « software »), auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et applications, comme par exemple un programme application destiné à être chargé et exécuté sur un composant de type FPGA (Field Programmable Gate Array). »

Bien que décrits à travers un certain nombre d'exemples de réalisation détaillés, le procédé proposé et l'objet pour la mise en œuvre du procédé comprennent différentes variantes, modifications et perfectionnements qui apparaîtront de façon évidente à l'homme de l'art.

## Revendications

1. Procédé de gestion d'une communication, à travers un réseau de communication, d'un second individu (Id2) vers un premier individu (Id1), dans lequel le premier individu est associé dans une première base de données à une pluralité de secondes adresses,
une deuxième base de données répertoriant en outre, pour chacune desdites secondes adresses, des informations relatives à des communications entre les premier et second individus,
le procédé comprenant, pour une première communication destinée au second individu et issue d'une première adresse (Id1-B) associée au premier individu :
- une identification de la première adresse,
- une initialisation d'une deuxième communication destinée au premier individu, vers la première adresse identifiée (Id1-B),
ledit procédé étant **caractérisé en ce qu'**il comprend ce qui suit, au niveau d'un dispositif de gestion du terminal du second individu :
- une sélection, selon la deuxième base de données, d'une deuxième adresse (Id1-A) parmi la pluralité de secondes adresses associées au premier individu,
- un adressage d'un message sur le terminal du deuxième individu, ledit message proposant ladite deuxième adresse sélectionnée,
- une redirection de la deuxième communication vers ladite deuxième adresse si ladite deuxième adresse sélectionnée est validée.

2. Procédé de gestion d'une communication d'un second individu vers un premier individu selon la revendication 1, dans lequel la deuxième adresse est validée par le second individu.

3. Procédé de gestion d'une communication d'un second individu vers un premier individu selon la revendication 1, dans lequel la sélection est ordonnée à partir d'informations relatives à des communications précédemment effectuées entre les premier et second individus.

4. Procédé de gestion d'une communication d'un second individu vers un premier individu selon la revendication 3, dans lequel la sélection s'effectue au moins à partir d'informations relatives à des communications de même mode que la deuxième communication initiée.

5. Procédé de gestion d'une communication d'un second individu vers un premier individu selon la revendication 4, dans lequel la sélection s'effectue également selon des informations de localisation du second individu.

6. Procédé de gestion d'une communication d'un second individu vers un premier individu selon la revendication 4, dans lequel la deuxième adresse correspond à une adresse fréquemment utilisée entre les premier et second individus.

7. Procédé de gestion d'une communication d'un second individu vers un premier individu selon la revendication 6, dans lequel la deuxième adresse correspond à une adresse fréquemment utilisée entre les premier et second individus dans un créneau temporel similaire.

8. Procédé de gestion d'une communication d'un second individu vers un premier individu selon la revendication 3, dans lequel la sélection est ordonnée à partir d'informations relatives à des lancements de communications infructueux précédemment effectuées vers le premier individu.

9. Procédé de gestion d'une communication d'un second individu vers un premier individu selon la revendication 1, dans lequel, si la deuxième communication est une communication en mode synchrone et que son lancement échoue, une troisième adresse comprise dans la sélection d'adresses est validée par le second individu, et un lancement d'une troisième communication est effectué vers la troisième adresse.

10. Programme informatique **caractérisé en ce qu'**il comporte des instructions pour la mise en œuvre du procédé selon l'une des revendications précédentes, lorsque ce programme est exécuté par un processeur.

11. Support de données sur lequel a été mémorisée un programme informatique selon la revendication 10.

12. Dispositif de gestion (APP) du terminal d'un second individu, apte à gérer une communication, à travers un réseau de communication, du second individu vers un premier individu, dans lequel le premier individu est associé dans une première base de données à une pluralité de secondes adresses,
une deuxième base de données répertoriant en outre, pour chacune desdites secondes adresses, des informations relatives à des communications entre les premier et second individus,
ledit dispositif étant **caractérisé en ce qu'**il comprend, pour une première communication destinée au second individu et issue d'une première adresse (Id1-B) associée au premier individu :
- un module d'identification apte à identifier la première adresse,
- un module de sélection apte à sélectionner, selon la deuxième base de données, suite à une initialisation d'une deuxième communication destinée au premier individu, vers la première adresse identifiée (Id1-B), une deuxième adresse (Id1-A) parmi la pluralité de secondes adresses associées au premier individu,
- un module d'adressage d'un message sur le terminal du deuxième individu, ledit message proposant ladite deuxième adresse sélectionnée,
- un module de redirection de la deuxième communication vers ladite deuxième adresse si ladite deuxième adresse sélectionnée est validée.

## Patentansprüche

1. Verfahren zur Verwaltung einer Kommunikation, über ein Kommunikationsnetz, von einer zweiten Person (Id2) zu einer ersten Person (Id1), wobei die erste Person in einer ersten Datenbank einer Vielzahl zweiter Adressen zugeordnet ist,
wobei eine zweite Datenbank außerdem für jede der zweiten Adressen Informationen bezüglich von Kommunikationen zwischen den ersten und zweiten Personen verzeichnet, wobei das Verfahren für eine erste Kommunikation, die für die zweite Person bestimmt ist und von einer der ersten Person zugeordneten ersten Adresse (Id1-B) stammt,
enthält:
- eine Identifizierung der ersten Adresse,
- eine Initialisierung einer für die erste Person bestimmten zweiten Kommunikation zur identifizierten ersten Adresse (Id1-B),
wobei das Verfahren **dadurch gekennzeichnet ist, dass** es Folgendes im Bereich einer Verwaltungsvorrichtung des Endgeräts der zweiten Person enthält:
- eine Auswahl, gemäß der zweiten Datenbank, einer zweiten Adresse (Id1-A) unter der Vielzahl von der ersten Person zugeordneten zweiten Adressen,
- eine Adressierung einer Nachricht auf dem Endgerät der zweiten Person, wobei die Nachricht die ausgewählte zweite Adresse vorschlägt,
- eine Umleitung der zweiten Kommunikation zur zweiten Adresse, wenn die ausgewählte zweite Adresse validiert wird.

2. Verwaltungsverfahren einer Kommunikation von einer zweiten Person zu einer ersten Person nach Anspruch 1, wobei die zweite Adresse von der zweiten Person validiert wird.

3. Verwaltungsverfahren einer Kommunikation von einer zweiten Person zu einer ersten Person nach Anspruch 1, wobei die Auswahl ausgehend von Informationen bezüglich von Kommunikationen angeordnet wird, die vorher zwischen den ersten und zweiten Personen ausgeführt wurden.

4. Verwaltungsverfahren einer Kommunikation von einer zweiten Person zu einer ersten Person nach Anspruch 3, wobei die Auswahl mindestens ausgehend von Informationen bezüglich von Kommunikationen im gleichen Modus wie die initiierte zweite Kommunikation ausgeführt wird.

5. Verwaltungsverfahren einer Kommunikation von einer zweiten Person zu einer ersten Person nach Anspruch 4, wobei die Auswahl ebenfalls gemäß Lokalisierungsinformationen der zweiten Person ausgeführt wird.

6. Verwaltungsverfahren einer Kommunikation von einer zweiten Person zu einer ersten Person nach Anspruch 4, wobei die zweite Adresse einer Adresse entspricht, die häufig zwischen den ersten und zweiten Personen verwendet wird.

7. Verwaltungsverfahren einer Kommunikation von einer zweiten Person zu einer ersten Person nach Anspruch 6, wobei die zweite Adresse einer Adresse entspricht, die häufig zwischen den ersten und zweiten Personen in einem gleichen Zeitschlitz verwendet wird.

8. Verwaltungsverfahren einer Kommunikation von einer zweiten Person zu einer ersten Person nach Anspruch 3, wobei die Auswahl ausgehend von Informationen bezüglich von erfolglosen Starts von Kommunikationen angeordnet wird, die vorher zur ersten Person ausgeführt wurden.

9. Verwaltungsverfahren einer Kommunikation von einer zweiten Person zu einer ersten Person nach Anspruch 1, wobei, wenn die zweite Kommunikation im Synchronmodus ist und ihr Start fehlschlägt, eine in der Auswahl von Adressen enthaltene dritte Adresse von der zweiten Person validiert wird, und ein Start einer dritten Kommunikation zur dritten Adresse ausgeführt wird.

10. EDV-Programm, **dadurch gekennzeichnet, dass** es Anweisungen zur Durchführung des Verfahrens nach einem der vorhergehenden Ansprüche aufweist, wenn dieses Programm von einem Prozessor ausgeführt wird.

11. Datenträger, auf dem ein EDV-Programm nach Anspruch 10 gespeichert wurde.

12. Vorrichtung zur Verwaltung (APP) des Endgeräts einer zweiten Person, die eine Kommunikation von der zweiten Person zu einer ersten Person über ein Kommunikationsnetz verwalten kann, wobei die erste Person in einer ersten Datenbank einer Vielzahl von zweiten Adressen zugeordnet ist,
wobei eine zweite Datenbank außerdem für jede der zweiten Adressen Informationen bezüglich von Kommunikationen zwischen den ersten und zweiten Personen verzeichnet, wobei die Vorrichtung **dadurch gekennzeichnet ist, dass** sie für eine erste Kommunikation, die für die zweite Person bestimmt ist und von einer der ersten Person zugeordneten ersten Adresse (Id1-B) stammt, enthält:
- ein Identifizierungsmodul, das die erste Adresse identifizieren kann,
- ein Auswahlmodul, das gemäß der zweiten Datenbank nach einer Initialisierung einer für die erste Person bestimmten zweiten Kommunikation zur identifizierten ersten Adresse (Id1-B) eine zweite Adresse (Id1-A) unter der Vielzahl von der ersten Person zugeordneten zweiten Adressen auswählen kann,
- ein Adressierungsmodul einer Nachricht auf dem Endgerät der zweiten Person, wobei die Nachricht die ausgewählte zweite Adresse vorschlägt,
- ein Umleitungsmodul der zweiten Kommunikation zur zweiten Adresse, wenn die ausgewählte zweite Adresse validiert ist.

## Claims

1. Method for managing a communication, through a communication network, from a second individual (Id2) to a first individual (Id1), in which the first individual is associated in a first database with a plurality of second addresses,
a second database furthermore listing, for each of said second addresses, information relating to communications between the first and second individuals,
the method comprising, for a first communication intended for the second individual and arising from a first address (Id1-B) associated with the first individual:
- identification of the first address,
- initialization of a second communication intended for the first individual, to the identified first address (Id1-B),
said method being **characterized in that** it comprises the following, at a management device for managing the terminal of the second individual:
- selection, according to the second database, of a second address (Id1-A) from among the plurality of second addresses associated with the first individual,
- addressing of a message to the terminal of the second individual, said message proposing said selected second address,
- redirection of the second communication to said second address if said selected second address is validated.

2. Method for managing a communication from a second individual to a first individual according to Claim 1, in which the second address is validated by the second individual.

3. Method for managing a communication from a second individual to a first individual according to Claim 1, in which the selection is ordered on the basis of information relating to communications performed previously between the first and second individuals.

4. Method for managing a communication from a second individual to a first individual according to Claim 3, in which the selection is performed at least on the basis of information relating to communications of the same mode as the second communication initiated.

5. Method for managing a communication from a second individual to a first individual according to Claim 4, in which the selection is also performed according to information in respect of location of the second individual.

6. Method for managing a communication from a second individual to a first individual according to Claim 4, in which the second address corresponds to an address used frequently between the first and second individuals.

7. Method for managing a communication from a second individual to a first individual according to Claim 6, in which the second address corresponds to an address used frequently between the first and second individuals in a similar time slot.

8. Method for managing a communication from a second individual to a first individual according to Claim 3, in which the selection is ordered on the basis of information relating to fruitless launches of communications previously performed to the first individual.

9. Method for managing a communication from a second individual to a first individual according to Claim 1, in which, if the second communication is a communication in synchronous mode and if its launch fails, a third address included in the selection of addresses is validated by the second individual, and a launch of a third communication is performed to the third address.

10. Computer program, **characterized in that** it comprises instructions for the implementation of the method according to one of the preceding claims when this program is executed by a processor.

11. Data medium on which a computer program according to Claim 10 has been stored.

12. Management device (APP) for managing the terminal of a second individual, able to manage a communication, through a communication network, from the second individual to a first individual, in which the first individual is associated in a first database with a plurality of second addresses,
a second database furthermore listing, for each of said second addresses, information relating to communications between the first and second individuals,
said device being **characterized in that** it comprises, for a first communication intended for the second individual and arising from a first address (Id1-B) associated with the first individual:
- an identification module able to identify the first address,
- a selection module able to select, according to the second database, following initialization of a second communication intended for the first individual, to the identified first address (Id1-B), a second address (Id1-A) from among the plurality of second addresses associated with the first individual,
- a module for addressing a message to the terminal of the second individual, said message proposing said selected second address,
- a module for redirecting the second communication to said second address if said selected second address is validated.
